# EUROPEAN PATENT SPECIFICATION

(11) **EP 3 179 146 B1**
(45) Date of publication and mention of the grant of the patent: **25.11.2020**
(21) Application number: 15829128.6
(22) Date of filing: 04.08.2015
(51) Int. Cl.: F16L 9/02, B32B 1/08, B32B 15/082, C23C 2/06, F16L 58/08, F16L 58/10, C22C 18/04, B32B 15/085, B32B 15/18, B32B 15/20, B32B 27/08, B32B 27/20, B32B 27/28, B32B 27/30, B32B 27/32, B32B 27/34, B32B 27/36

(54) **RESIN-COATED METAL PIPE AND METHOD FOR MANUFACTURING SAME**
HARZBESCHICHTETES METALLROHR UND VERFAHREN ZUR HERSTELLUNG DAVON
TUYAU MÉTALLIQUE REVÊTU DE RÉSINE, ET PROCÉDÉ DE FABRICATION DE CELUI-CI

(30) Priority: 06.08.2014 JP 2014160758
(43) Date of publication of application: 14.06.2017
(73) Proprietor: AGC Inc., Tokyo 100-8405 (JP); Sanoh Industrial Co., Ltd., Tokyo 150-0013 (JP)
(72) Inventor: WATANABE, Ryoji, Tokyo 100-8405 (JP); NISHI, Eiichi, Tokyo 100-8405 (JP); SASAKI, Toru, Tokyo 100-8405 (JP); HOSODA, Tomoya, Tokyo 100-8405 (JP); KAWAI, Naoki, Koga-shi Ibaraki 3060041 (JP); GUNJI, Takahiro, Koga-shi Ibaraki 3060041 (JP)
(74) Representative: Müller-Boré & Partner Patentanwälte PartG mbB
(86) International application number: PCT/JP2015/072117
(87) International publication number: WO 2016/021610

(56) References cited:
- EP-A1- 2 581 467
- WO-A1-2011/155450
- JP-A- H03 234 990
- JP-A- 2003 166 078
- JP-A- 2005 015 834
- JP-A- 2006 111 885
- JP-A- 2006 111 885

## Description

The present invention relates to a resin-coated metal pipe and a method for its production.

Various piping (fuel transport piping, brake system piping, etc.) in vehicles (automobiles, etc.), etc. is required to have heat resistance in a high-temperature environment, corrosion resistance to salt water, a battery fluid, etc., and impact resistance to chipping stones, etc. Therefore, for such piping, a resin-coated metal pipe is used wherein a plating layer having corrosion resistance and impact resistance is formed on the outer peripheral surface of a metal pipe having heat resistance, and a resin coating layer having corrosion resistance and impact resistance is formed on the surface of the plating layer.

As such a resin-coated metal pipe, for example, the following ones have been proposed.
(1) a resin-coated metal pipe wherein a zinc plating layer is formed by electroplating on the outer peripheral surface of a metal pipe, a primer layer is formed on the surface of the zinc plating layer, and a resin coating layer is formed by extrusion molding of a polyamide on the surface of the primer layer (Patent Document 1).
(2) a resin-coated metal pipe wherein a Zn-AI-Mg alloy plating layer is formed by hot dipping plating on the outer peripheral surface of a metal pipe, a primer layer is formed on the surface of the Zn-AI-Mg alloy plating layer, and a resin coating layer is formed by extrusion molding of a polyamide on the surface of the primer layer (Patent Document 2).
(3) a resin-coated metal pipe wherein a zinc plating layer is formed by electroplating on the outer peripheral surface of a metal pipe, a primer layer is formed on the surface of the zinc plating layer, and a resin coating layer is formed by coating a fluororesin coating material on the surface of the primer layer (Patent Document 3).

In the resin-coated metal pipes (1) to (3), due to poor adhesion between the plating layer and the resin coating layer, it is necessary to provide a primer layer between the plating layer and the resin coating layer. Therefore, in the resin-coated metal pipes (1) to (3), there is a problem in that a step for forming the primer layer is required as an extra step, or environmental load increases due to the solvent at the time of forming the primer layer.

Further, in the resin-coated metal pipes (1) and (2), since the resin coating layer is a polyamide, there is a problem that as compared with a fluororesin, the corrosion resistance is poor.

Further, in the resin-coated metal pipes (1) and (3), since the plating layer is formed by electroplating, there is a problem that as compared with the case of forming a plating layer by hot dipping plating, the plating layer is thin, and the corrosion resistance and impact resistance are inferior.

Further, in the resin-coated metal pipe (3), there is a problem that environmental load increases due to the solvent at the time of applying the fluororesin coating material, or since the resin coating layer formed by coating is thin, recoating is required whereby the number of steps is increased.

### PRIOR ART DOCUMENTS

### PATENT DOCUMENTS

Patent Document 1: JP-A-10-315295
Patent Document 2: WO2007/052683
Patent Document 3: JP-A-2003-269660

JP 2003-166078 A discloses a metal tube having a corrosion resistant coating layer.

EP 2 581 467 A1 discloses a metal pipe for vehicle piping and a surface treatment method for a pipe.

JP 2006-111885 A discloses a tetrafluoroethylene copolymer.

JP 2005-015834 A discloses a highly corrosion-resistant coated steel sheet capable of being welded superior in corrosion resistance.

The present invention is to provide a resin-coated metal pipe which is excellent in corrosion resistance and impact resistance, wherein adhesion between a plating layer and a resin coating layer is good even without a primer layer, and whereby the number of steps at the time of production is small, and an environmental load is small; and a method whereby a resin-coated metal pipe which is excellent in corrosion resistance and impact resistance, wherein adhesion between a plating layer and a resin coating layer is good even without a primer layer, can be produced by a relatively small number of steps and under a relatively small environmental load.

The subject matter of the present invention is characterized in the claims.

The resin-coated metal tube of the present invention is excellent in corrosion resistance and impact resistance, wherein adhesion between a plating layer and a resin coating layer is good even without a primer layer, and whereby the number of steps at the time of production is small, and an environmental load is small. According to the production method of the present invention, it is possible to produce a resin-coated metal pipe which is excellent in corrosion resistance and impact resistance, wherein adhesion between a plating layer and a resin coating layer is good even without a primer layer, by a relatively small number of steps, and under a relatively small environmental load.

### BRIEF DESCRIPTION OF DRAWING

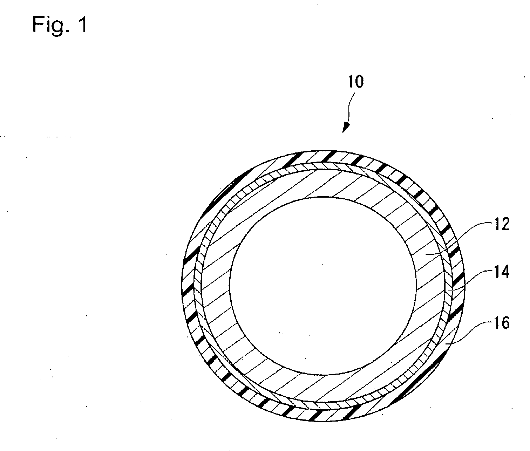

Fig. 1 is a sectional view showing an example of the resin-coated metal pipe of the present invention.

The following definitions of terms apply throughout the present specification including claims.

The term "hot dipping plating" means a method of dipping a material to be treated in a molten metal, followed by withdrawing it to form a metal coating on the surface of the material to be treated.

The term "electroplating" means a method wherein a material to be treated and a counter electrode are immersed in an aqueous solution containing a metal salt, and by applying a current using the material to be treated as a negative electrode and the counter electrode as a positive electrode, a metal coating is formed on the surface of the material to be treated.

A "carbonyl group-containing group" means a group having a carbonyl group (-C(=O)-) in its structure.

Being "melt-moldable" is meant for exhibiting melt flowability.

The term "exhibiting melt flowability" means that under a condition of a load of 49N at a temperature higher by at least 20°C than the melting point of the resin, there is a temperature at which the melt flow rate (hereinafter referred to as MFR) becomes to be from 0.1 to 1,000 g/10min.

A "structural unit" means a unit derived from a monomer, as formed by polymerization of the monomer. A structural unit may be a unit formed directly by a polymerization reaction or may be a unit having part of the unit converted to another structure by treating the polymer.

A "monomer" means a compound having a polymerizable carbon-carbon double bond.

Fig. 1 is a sectional view showing an example of the resin-coated metal pipe of the present invention.

The resin-coated metal pipe 10 comprises a metal pipe 12, a plating layer 14 formed on the outer peripheral surface of the metal pipe 12, and a resin coating layer 16 formed on the surface of the plating layer 14.

The metal pipe may, for example, be a steel pipe, a copper pipe, pipes of other metals, etc., and in the case of a resin-coated metal pipe for vehicle piping, a steel pipe is preferred.

The steel pipe may, for example, be a single-wall steel pipe, a double-wall steel pipe, a seamless pipe, etc. The steel pipe may have a copper layer on its surface or polymerization surface. The steel for the steel pipe may, for example, be low-carbon steel, medium carbon steel, high carbon steel, alloy steel, etc.

The outer diameter of the metal pipe may vary depending on the use, material, etc., and in the case of a steel pipe for a resin-coated metal pipe for vehicle piping, it is preferably at most 20 mm. Usually it is preferably from 30 mm to 10 mm.

The thickness of the metal pipe may vary depending on the use, material, etc., and in the case of a steel pipe for a resin-coated metal pipe for vehicle piping, it is preferably from 0.65 to 1.2 mm, more preferably from 0.7 mm to 1.0 mm.

The plating layer is formed by hot dipping plating. In the case of a steel pipe for a resin-coated metal pipe for vehicle piping, a conventional plating layer has been formed usually by electroplating. By forming a plating layer by hot dipping plating, it is possible to form a plating layer with a film thickness thicker than by electroplating in a short time. The plating layer with such a thick film thickness is capable of sufficiently imparting impact resistance to the resin-coated metal pipe.

The material for the plating layer may, for example, be zinc, a zinc alloy, aluminum, an aluminum alloy, etc., and from the viewpoint of corrosion resistance to the steel pipe, a zinc alloy or zinc is preferred.

As the zinc alloy, from the viewpoint of chemical stability of the plating layer itself, an alloy comprising zinc and one or more metals having ionization tendency higher than zinc, is preferred, and a Zn-AI-Mg alloy is more preferred.

In the zinc alloy (but excluding the Zn-AI-Mg alloy), the content of zinc is preferably at least 70 mass%, more preferably from 75 to 95 mass%, from the viewpoint of corrosion resistance to the steel pipe.

As the Zn-Al-Mg alloy, from the viewpoint of corrosion resistance and surface appearance, preferred is one comprising Mg: 0.05 to 10 mass%, Al: 4 to 22 mass%, the rest being Zn and unavoidable impurities. Particularly preferred is one comprising Mg: 1 to 5 mass%, Al: 4 to 10 mass%, the rest being Zn and unavoidable impurities.

A Zn-AI-Mg alloy plating layer formed by hot dipping plating has a ternary eutectic structure of Al/Zn/Zn₂Mg. The Al phase, the Zn phase and the Zn₂Mg phase forming the ternary eutectic structure have irregular sizes and shapes, respectively, and are convoluted with one another.

The Al phase is derived from a phase Al" at a high temperature in the ternary equilibrium diagram of Al-Zn-Mg. The Al" phase at a high temperature is an Al solid solution having Zn solid-solubilized therein and containing a small amount of Mg. The Al" phase at high temperature usually appears, at a normal temperature, as separated into a fine Al phase and a fine Zn phase.

The Zn phase is a Zn solid solution having a small amount of Al solid-solubilized therein and, in some cases, further having Mg solid-solubilized therein.

The Zn₂Mg phase is an intermetallic compound phase which is present, in a binary equilibrium diagram of Zn-Mg, in the vicinity of a point of about 84 mass% of Zn.

The area ratio of the ternary eutectic structure at the surface of the plating layer is preferably as high as possible. By increasing the area ratio of the ternary eutectic structure, specifically by adjusting the area ratio of phases other than the Zn phase to be at least 20%, it is possible to improve the adhesion to the resin coating layer. Further, it is possible to improve the corrosion resistance of the metal pipe.

At the surface of the plating layer, the area ratio of the Al phase is preferably from 15 to 45%, the area ratio of the Zn phase is preferably from 50 to 80%, and the area ratio of the Zn₂Mg phase is preferably from 5 to 25%.

The area ratio of the ternary eutectic structure can be increased, for example, by lowering the concentration of Al in the plating bath.

The ternary eutectic structure and other phases can be easily distinguished by observing the surface of the plating layer by an electron microscope. The area ratio of each phase can be determined by analyzing the surface of the plating layer by means of an electron probe microanalyzer (EPMA).

The thickness of the plating layer is preferably from 10 to 50 µm, more preferably from 15 to 50 µm, more preferably from 20 to 50 µm, from the viewpoint of the corrosion resistance, impact resistance and economical efficiency.

The coating amount of the plating layer is preferably from 10 to 600 g/m², more preferably from 50 to 200 g/m². When the coating amount of the plating layer is at least 10 g/m², the corrosion resistance will be further improved. When the coating amount of the plating layer is at most 600 g/m², peeling at the interface between the metal pipe and the plating layer will be less likely to occur at a processing site during the bending process, even if ductibility is different between the metal pipe and the plating layer.

The resin coating layer is formed by melt molding. By forming the resin coating layer by melt molding, it is possible to form by one step a resin coating layer with a thickness thicker than by coating. The thick resin coating layer is capable of sufficiently imparting impact resistance to the resin-coated metal pipe. Further, in the melt molding of the resin coating layer, a solvent is not required, and an environmental load during the production is small as compared with coating.

The thickness of the resin coating layer is preferably from 1 to 100 µm, more preferably from 1 to 50 µm, from the viewpoint of the corrosion resistance, impact resistance and economical efficiency. Here, the resin coating layer is preferably as thin as possible so long as it can protect the plating layer, but from the viewpoint of stable production, from 10 to 100 µm is more preferred.

The resin coating layer is made of a resin material comprising a fluororesin (A).

The resin material may contain components other than the fluororesin (A) to the extent not to impair the effects of the present invention.

Other components may, for example, be melt-moldable other resins (B) other than the fluororesin (A), additives (C), etc.

The fluororesin (A) is a melt-moldable fluororesin.

The fluororesin (A) is one whereby, under a condition of a load of 49N at a temperature higher by at least 20°C than the melting point of the resin, there is a temperature at which MFR becomes to be from 0.1 to 1,000 g/10min, preferably one whereby there is a temperature at which MFR becomes to be from 0.5 to 100 g/10min, more preferably one whereby there is a temperature at which MFR becomes to be from 1 to 30 g/10min, further preferably one whereby there is a temperature at which MFR becomes to be from 5 to 20 g/10min. When the MFR is at least the above lower limit value, the fluidity of the resin material will be good. When MFR is at most the above upper limit value, the mechanical strength of the resin coating layer will be good. Here, as the temperature for measuring MFR, 297°C or 372°C is usually employed depending upon the melting point of the fluororesin (A).

MFR of the fluororesin (A) is an index for the molecular weight of the fluororesin (A), indicating that the larger the MFR, the lower the molecular weight, and the smaller the MFR, the larger the molecular weight. The molecular weight of the fluororesin (A) can be adjusted by the production conditions of the fluororesin (A). For example, if the polymerization time is shortened in the polymerization of the monomer, the molecular weight tends to be small, and MFR tends to be large. Further, if a fluororesin (A) obtained by a polymerization reaction is heat-treated, a cross-linking structure will be formed, whereby the molecular weight tends to be large, and MFR tends to be small.

The melting point of the fluororesin (A) is preferably from 180 to 320°C, more preferably from 200 to 300°C, further preferably from 230 to 300°C. When the melting point of the fluororesin (A) is at least the lower limit value in the above range, the heat resistance of the resin coating layer will be improved. When the melting point of the fluororesin (A) is at most the upper limit value in the above range, melt moldability of the resin material becomes good.

The fluororesin (A) has at least one type of reactive functional group selected from the group consisting of a carbonyl group-containing group, a hydroxy group, an epoxy group and an isocyanate group.

As a fluorinated copolymer (A1) has a reactive functional group, adhesion between the plating layer and the resin coating layer will be good.

The fluorocarbon resin (A) preferably has at least a carbonyl group-containing group as a reactive functional group.

A carbonyl group-containing group is a group containing a carbonyl group (-C(=O)-) in its structure. The carbonyl group-containing group may, for example, be a group containing a carbonyl group between carbon atoms of a hydrocarbon group, a carbonate group, a carboxy group, a haloformyl group, an alkoxycarbonyl group, an acid anhydride residue group, etc. From such a viewpoint that adhesion between the plating layer and the resin coating layer will be further improved, an acid anhydride residue group is preferred.

The hydrocarbon group may, for example, be an alkylene group having from 2 to 8 carbon atoms. Here, the number of carbon atoms in the alkylene group is the number of carbon atoms in a state that does not contain a carbonyl group. The alkylene group may be linear or may be branched.

The haloformyl group is represented by -C(=O)-X (wherein X is a halogen atom). The halogen atom in the haloformyl group may, for example, be a fluorine atom, a chlorine atom, etc., and a fluorine atom is preferred. That is, the haloformyl group is preferably a fluoroformyl group (referred to also as a carbonyl fluoride group).

The alkoxy group in the alkoxycarbonyl group may be linear or may be branched. As such an alkoxy group, an alkoxy group having from1 to 8 carbon atoms is preferred, and a methoxy group or an ethoxy group is more preferred.

The content of reactive functional groups in the fluororesin (A) is preferably at least 500 groups, more preferably at least 600 groups, further preferably at least 800 groups, to 1×10⁶ carbon atoms in the main chain of the fluororesin (A). The content of reactive functional groups in the fluororesin (A) is preferably at most 10,000 groups, more preferably at most 5,000 groups, further preferably at most 3,000 groups, to 1×10⁶ carbon atoms in the main chain of the fluororesin (A).

When the content of reactive functional groups is at least the above lower limit value, adhesion between the plating layer and the resin coating layer will be further improved. When the content of reactive functional groups is at most the above upper limit value, balance between the adhesiveness and the heat resistance of the resin coating layer will be excellent.

The content of reactive functional groups in the fluororesin (A) is easily adjustable to be within the above range by preparing the fluororesin (A) by employing a method (1) as described later.

The content of reactive functional groups in the fluororesin (A) can be measured by a method such as a nuclear magnetic resonance (NMR) analysis, an infrared absorption spectrum analysis, etc. For example, as described in JP-A-2007-314720, the proportion (mol%) of structural units having reactive functional groups in all structural units constituting the fluororesin (A) is obtainable by using a method such as an infrared absorption spectrum analysis, and the content of reactive functional groups can be calculated from the proportion.

The fluororesin (A) may have further reactive functional groups derived from at least one member selected from the group consisting of a chain transfer agent and a polymerization initiator used in the preparation of the fluororesin (A).

The fluororesin (A) has reactive functional groups derived from a monomer. Such a fluororesin (A) may be prepared by a method (1) as described below. According to the method (1), it is possible to easily control the content of reactive functional groups, whereby it is readily possible to obtain a fluororesin (A) capable of forming a resin coating layer having good adhesion properties.

The fluororesin (A) having reactive functional groups derived from a monomer is a fluorinated copolymer (A1) comprising structural units (u1) based on the following monomer (m1), structural units (u2) based on the following monomer (m2) and structural units (u3) based on the following monomer (m3), since the corrosion resistance, impact resistance and adhesion of the resin coating layer will be thereby further excellent:
Monomer (m1): tetrafluoroethylene,
Monomer (m2): a monomer having a reactive functional group,
Monomer (m3): a monomer other than the monomer (m1) and the monomer (m2). Structural unit (u1):

The monomer (m1) to constitute structural units (u1) is tetrafluoroethylene (hereinafter referred to also as TFE).

As the fluorinated copolymer (A1) has structural units (u1), corrosion resistance and impact resistance of the resin coating layer will be good.

### Structural units (u2):

The monomer (m2) to constitute structural units (u2) is a monomer having a reactive functional group.

As the fluorinated copolymer (A1) has structural units (u2), adhesion of the resin coating layer will be good.

As the monomer (m2), from such a viewpoint that adhesion of the resin coating layer will be further excellent, a cyclic hydrocarbon monomer having an acid anhydride residue group as a reactive functional group is preferred.

As such a cyclic hydrocarbon monomer, itaconic anhydride (hereinafter referred to also as IAH), citraconic anhydride (hereinafter referred to also as CAH), 5-norbornene-2,3-dicarboxylic anhydride (hereinafter referred to also as NAH), maleic anhydride, etc. may be mentioned. As the cyclic hydrocarbon monomer, one type may be used alone, or two or more types may be used in combination.

As the cyclic hydrocarbon monomer, from such a viewpoint that it is possible to produce a fluorinated copolymer (A1) having an acid anhydride residue group without using a special polymerization method (see JP-A-11-193312) which is required in the case of using maleic anhydride, at least one member selected from the group consisting of IAH, CAH and NAH, is preferred, and from such a viewpoint that adhesion of the resin coating layer will be further excellent, NAH is particularly preferred.

### Structural units (u3):

A monomer (m3) to constitute structural units (u3) is a monomer other than the monomer (m1) and the monomer (m2).

As such a monomer (m3), the following monomer (m31) and the following monomer (m32) may be mentioned. As the monomer (m3), from such a viewpoint that heat resistance of the resin coating layer will be further excellent, the monomer (m31) is preferred. As the monomer (m3), from such a viewpoint that melt moldability of the resin material will be excellent, the monomer (m32) is preferred.

Monomer (m31): a fluorinated monomer (but excluding the monomer (m1)).

Monomer (m32): a non-fluorinated monomer (but excluding the monomer (m2)).

As the monomer (m31), from the viewpoint of heat resistance and mechanical properties, a fluorinated monomer having one polymerizable double bond is preferred. As such a fluorinated monomer, for example, the following ones may be mentioned.

A fluoroolefin (but excluding the monomer (m1)): vinyl fluoride, vinylidene fluoride (hereinafter referred to also as VdF), trifluoroethylene, chlorotrifluoroethylene (hereinafter referred to also as CTFE), hexafluoropropylene (hereinafter referred to also as HFP), etc.

CF₂=CFOR^{f1} (wherein R^{f1} is a perfluoroalkyl group having from 1 to 10 carbon atoms which may contain an oxygen atom between carbon atoms).

CF₂=CFOR^{f2}SO₂X¹ (wherein R^{f2} is a perfluoroalkylene group having from 1 to 10 carbon atoms which may contain an oxygen atom between carbon atoms, and X¹ is a halogen atom or a hydroxy group).

CF₂=CFOR^{f3}CO₂X² (wherein R^{f3} is a perfluoroalkylene group having from 1 to 10 carbon atoms which may contain an oxygen atom between carbon atoms, and X² is a hydrogen atom or an alkyl group having at most 3 carbon atoms).

CF₂=CF(CF₂)ₚOCF=CF₂ (wherein p is 1 or 2).

CH₂=CX³(CF₂)_{q}-X⁴ (wherein X³ is a hydrogen atom or a fluorine atom, q is an integer of from 2 to 10, and X⁴ is a hydrogen atom or a fluorine atom).

Perfluoro(2-methylene-4-methyl-1,3-dioxolane), etc.

Here, "perfluoro" means that all hydrogen atoms in a hydrocarbon group are substituted by fluorine.

As the monomer (m31), from such a viewpoint that heat resistance will be further excellent, at least one member selected from the group consisting of VdF, CTFE, HFP, CF₂=CFOR^{f1} and CH₂=CX³(CF₂)_{q}X⁴ is preferred, and CF₂=CFOR^{f1} or HFP is more preferred.

As CF₂=CFOR^{f1}, the following ones may be mentioned, and from such a viewpoint that heat resistance will be further excellent, CF₂=CFOCF₂CF₂CF₃ (hereinafter referred to also as PPVE) is preferred.
CF₂=CFOCF₂CF₃,
CF₂=CFOCF₂CF₂CF₃,
CF₂=CFOCF₂CF₂CF₂CF₃,
CF₂=CFO(CF₂)₈F, etc.

As CH₂=CX³(CF₂)_{q}X⁴, the following ones may be mentioned, and from such a viewpoint that heat resistance will be further excellent, CH₂=CH(CF₂)₄F or CH₂=CH(CF₂)₂F is preferred.
CH₂=CH(CF₂)₂F,
CH2=CH(CF2)3F,
CH₂=CH(CF₂)₄F,
CH2=CF(CF2)3H,
CH₂=CF(CF₂)₄H, etc.

As the monomer (m31), one type may be used alone, or two or more types may be used in combination.

As the monomer (m32), from the viewpoint of melt moldability, a non-fluorinated monomer having one polymerizable double bond is preferred. As the non-fluorinated monomer, for example, the following ones may be mentioned. From the viewpoint of melt-moldability, easy availability, etc., ethylene, propylene or vinyl acetate is preferred, and ethylene is more preferred.

An olefin having at most 3 carbon atoms: ethylene, propylene, etc.

A vinyl ester: vinyl acetate, etc.

As the monomer (m32), one type may be used alone, or two or more types may be used in combination.

In a case where the monomer (m3) to constitute structural units (u3) is the monomer (m31), it is preferred that based on the total molar amount of structural units (u1), structural units (u2) and structural units (u3), the structural units (u1) are from 80 to 99.69 mol%, the structural units (u2) are from 0.01 to 0.5 mol%, and the structural units (u3) are from 0.3 to 19.99 mol%, it is more preferred that the structural units (u1) are from 90 to 99.58 mol%, the structural units (u2) are from 0.02 to 0.3 mol% and the structural units (u3) are from 0.4 to 9.98 mol%, and it is further preferred that the structural units (u1) are from 97.5 to 99.5 mol%, the structural units (u2) are from 0.05 to 0.3 mol% and the structural units (u3) are from 0.45 to 2.45 mol%.

When the contents of the respective structural units are within the above ranges, the corrosion resistance, impact resistance, adhesion and heat resistance of the resin coating layer will be good.

In a case where the monomer (m3) to constitute structural units (u3) is the monomer (m32), it is preferred that based on the total molar amount of structural units (u1), structural units (u2) and structural units (u3), the structural units (u1) are from 50 to 99.69 mol%, the structural units (u2) are from 0.01 to 1.0 mol% and the structural units (u3) are from 0.3 to 49.99 mol%, it is more preferred that the structural units (u1) are from 52 to 69.98 mol%, the structural units (u2) are from 0.02 to 1.0 mol% and the structural units (u3) are from 30 to 47.98 mol%, and it is further preferred that the structural units (u1) are from 53 to 64.95 mol%, the structural units (u2) are from 0.05 to 0.8 mol% and the structural units (u3) are from 35 to 46.95 mol%.

When the contents of the respective structural units are within the above ranges, the corrosion resistance, impact resistance and adhesion of the resin coating layer, and melt-moldability of the resin material will be good.

In a case where the monomer (m3) to constitute structural units (u3) is the monomer (m31) and the monomer (m32), it is preferred that based on the total molar amount of structural units (u1), structural units (u2) and structural units (u3), the structural units (u1) are from 50 to 99.69 mol%, the structural units (u2) are from 0.01 to 1.0 mol%, the structural units (u3) are from 1.0 to 49.99 mol%, it is more preferred that the structural units (u1) are from 52 to 69.98 mol%, the structural units (u2) are from 0.02 to 1.0 mol% and the structural units (u3) are from 30 to 47.98 mol%, and it is further preferred that the structural units (u1) are from 53 to 64.95 mol%, the structural units (u2) are from 0.05 to 0.8 mol% and the structural units (u3) are from 35 to 46.95 mol%.

When the contents of the respective structural units are within the above ranges, the corrosion resistance, impact resistance, adhesion and heat resistance of the resin coating layer, and melt-moldability of the resin material will be good.

In a case where the monomer (m3) to constitute structural units (u3) is the monomer (m31) and the monomer (m32), the molar ratio (structural units (u31)/structural units (u32)) of the structural units (u31) based on the monomer (m31) to the structural units (u32) based on the monomer (m32) is preferably from 0/100 to 100/0, more preferably from 1/99 to 10/90.

The contents of the respective structural units can be calculated by a melt NMR analysis, a fluorine content analysis, an infrared absorption spectrum analysis, etc. of the fluorinated copolymer (A1).

Here, in a case where the fluorinated copolymer (A1) comprises structural units (u1), structural units (u2) and structural units (u3), and the structural units (u2) are based on a cyclic hydrocarbon monomer having one acid anhydride residue group, the content of the structural units (u2) being 0.01 mol% based on the total molar amount of structural units (u1), structural units (u2) and structural units (u3), corresponds to that the content of the acid anhydride residue groups in the fluorinated copolymer (A1) is 100 groups to 1×10⁶ carbon atoms in the main chain in the fluorinated copolymer (A1). The content of the structural units (u2) being 5 mol% based on the total molar amount of constituent units (u1), structural units (u2) and structural units (u3), corresponds to that the content of the acid anhydride residue groups in the fluorinated copolymer (A1) is 50,000 groups to 1×10⁶ carbon atoms in the main chain in the fluorocopolymer (A1).

In a case where structural units (u2) are based on a cyclic hydrocarbon monomer having an acid anhydride residue group, a fluorinated copolymer (A1) may have structural units based on a dicarboxylic acid (itaconic acid, citraconic acid, 5-norbornene-2,3-dicarboxylic acid, maleic acid, etc.) formed by partial hydrolysis of the cyclic hydrocarbon monomer. If it has such structural units based on the dicarboxylic acid, the content of such structural units shall be included in the content of the structural units (u2).

In a case where the monomer (m3) to constitute structural units (u3) is the monomer (m31), preferred examples of the fluorinated copolymer (A1) may be a TFE/PPVE/NAH copolymer, a TFE/PPVE/IAH copolymer, a TFE/PPVE/CAH copolymer, a TFE/HFP/IAH copolymer, a TFE/HFP/CAH copolymer, a TFE/VdF/IAH copolymer, a TFE/VdF/CAH copolymer, etc.

In a case where the monomer (m3) to constitute structural units (u3) is the monomer (m32), preferred examples of the fluorinated copolymer (A1) may be a TFE/IAH/ethylene copolymer, etc.

In a case where the monomer (m3) to constitute structural units (u3) is the monomer (m31) and the monomer (m32), preferred examples of the fluorinated copolymer (A1) may be a TFE/CH₂=CH(CF₂)₄F/IAH/ethylene copolymer, a TFE/CH₂=CH(CF₂)₄F/CAH/ethylene copolymer, a TFE/CH₂=CH(CF₂)₂F/IAH/ethylene copolymer, a TFE/CH₂=CH(CF₂)₂F/CAH/ethylene copolymer, etc.

In general, as methods for producing a fluororesin (A), for example, the following methods (1) to (3) may be mentioned, and the method (1) is preferred since it is thereby possible to easily control the content of reactive functional groups and to easily obtain a fluororesin (A) capable of forming a resin coating layer having good adhesion.
Method (1): a method of using a monomer having a reactive functional group at the time of producing the fluororesin (A) by a polymerization reaction.
Method (2): a method for producing the fluororesin (A) by a polymerization reaction by using a chain transfer agent having a reactive functional group. However, the chain transfer agent to be used here is required to be one having a reactive functional group not cleaved when the chain transfer agent generates radicals.
Method (3): a method for producing the fluororesin (A) by a polymerization reaction by using a polymerization initiator such as a radical polymerization initiator having a reactive functional group, etc. However, the polymerization initiator to be used here is required to be one having a reactive functional group not cleaved when the polymerization initiator generates radicals.

According to the method (1), it is possible to produce a fluororesin (A) having reactive functional groups derived from the monomer. In this case, the reactive functional groups are present in the structural units that constitute the fluororesin (A) in accordance with the present invention.

According to the method (2), it is possible to produce a fluororesin (A) having reactive functional groups derived from the chain transfer agent. In this case, the reactive functional groups are present as terminal groups at the main chain terminals of the fluororesin (A).

According to the method (3), it is possible to produce a fluororesin (A) having reactive functional groups derived from the polymerization initiator. In this case, the reactive functional groups are present as terminal groups at the main chain terminals of the fluororesin (A).

In a case where the reactive functional groups of the fluororesin (A) are derived from at least two types among the monomer, the chain transfer agent and the polymerization initiator, used in the preparation of the fluororesin (A), such a fluororesin (A) can be prepared by a combined use of at least two methods among the methods (1) to (3).

In the case of producing the fluororesin (A) by a polymerization reaction, the polymerization method is preferably a polymerization method using a radical polymerization initiator from the viewpoint of controlling MFR of the fluororesin (A).

As the polymerization method, a bulk polymerization method; a solution polymerization method using an organic solvent (such as a fluorinated hydrocarbon, a chlorinated hydrocarbon, a fluorinated chlorinated hydrocarbon, an alcohol, a hydrocarbon, etc.); a suspension polymerization method using an aqueous medium and, as the case requires, a suitable organic solvent; and an emulsion polymerization method using an aqueous medium and an emulsifier, may be mentioned, and from the viewpoint of controlling MFR of the fluororesin (A), a solution polymerization method is preferred.

In the case of producing a fluororesin (A) having reactive functional groups derived from a polymerization initiator, a radical polymerization initiator having a reactive functional group is used.

On the other hand, in the case of producing the fluororesin (A) having no reactive functional group derived from a polymerization initiator, a polymerization initiator may be used or may not be used. In the case of using a polymerization initiator, a radical polymerization initiator having no reactive functional group is used.

The radical polymerization initiator is preferably an initiator having a 10-hour half-life temperature of from 0 to 100°C, more preferably an initiator having such a temperature of from 20 to 90°C.

The radical polymerization initiator having a reactive functional group may, for example, be di-n-propyl peroxydicarbonate, diisopropyl peroxycarbonate, tert-butylperoxy isopropyl carbonate, bis(4-tert-butylcyclohexyl) peroxydicarbonate, di-2-ethylhexyl peroxydicarbonate, etc.

The radical polymerization initiator having no reactive functional group may, for example, be an azo compound (azobisisobutyronitrile, etc.), a non-fluorinated diacyl peroxide (isobutyryl peroxide, octanoyl peroxide, benzoyl peroxide, lauroyl peroxide, etc.), a peroxy dicarbonate (diisopropyl peroxy dicarbonate, etc.), a peroxy ester (tert-butyl peroxypivalate, tert-butyl peroxy isobutyrate, tert-butyl peroxy acetate, etc.), a fluorinated diacyl peroxide (a compound represented by (Z(CF₂)ᵣCOO)₂ (wherein Z is a hydrogen atom, a fluorine atom or a chlorine atom, and r is an integer from 1 to 10), etc.), an inorganic peroxide (potassium persulfate, sodium persulfate, ammonium persulfate, etc.), etc.

In the case of producing a fluororesin (A) having reactive functional groups derived from a chain transfer agent, a chain transfer agent having a reactive functional group is used.

On the other hand, in the case of producing a fluororesin (A) having no reactive functional group derived from a chain transfer agent, a chain transfer agent may be used or may not be used. In the case of using a chain transfer agent, a chain transfer agent having no reactive functional group is used.

The chain transfer agent having a reactive functional group may, for example, be acetic acid, acetic anhydride, methyl acetate, ethylene glycol, propylene glycol, etc., and from the viewpoint of high reactivity with a mating material, acetic anhydride having an anhydride residue group is preferred.

The chain transfer agent having no reactive functional group may, for example, be an alcohol (methanol, ethanol, etc.), a chlorofluorohydrocarbon (1,3-dichloro-1,1,2,2,3-pentafluoropropane, 1,1-dichloro-1-fluoroethane, etc.), a hydrocarbon (pentane, hexane, cyclohexane, etc.), etc.

The organic solvent to be used in the solution polymerization method, may, for example, be a perfluorocarbon, a hydrofluorocarbon, a chlorohydrofluorocarbon, a hydrofluoroether, etc. The number of carbon atoms is preferably from 4 to 12.

The perfluorocarbon may, for example, be perfluorocyclobutane, perfluoropentane, perfluorohexane, perfluorocyclopentane, perfluorocyclohexane, etc.

The hydrofluorocarbon may, for example, be 1-hydroperfluorohexane, etc.

The chlorohydrofluorocarbon may, for example, be 1,3-dichloro-1,1,2,2,3-pentafluoropropane, etc.

The hydrofluoroether may, for example, be methyl perfluorobutyl ether, 2,2,2-trifluoroethyl 2,2,1,1-tetrafluoroethyl ether, etc.

The polymerization temperature is preferably from 0 to 100°C, more preferably from 20 to 90°C.

The polymerization pressure is preferably from 0.1 to 10 MPa, more preferably from 0.5 to 3 MPa.

The polymerization time is preferably from 1 to 30 hours, more preferably from 3 to 15 hours.

In the case of using a cyclic hydrocarbon monomer having an acid anhydride residue group as the monomer (m2) to constitute structural units (u2) of the fluorinated copolymer (A1), the concentration of the cyclic hydrocarbon monomer during the polymerization is preferably from 0.01 to 5 mol%, more preferably from 0.1 to 3 mol%, further preferably from 0.1 to 2 mol%, based on all the monomers. When the concentration of the cyclic hydrocarbon monomer is within the above range, the polymerization rate during production will be proper. When the concentration of the cyclic hydrocarbon monomer is too high, the polymerization rate tends to decrease. In the polymerization, as the cyclic hydrocarbon monomer is consumed, it is preferred that the consumed amount is supplied continuously or intermittently to the polymerization reactor to maintain the concentration of the cyclic hydrocarbon monomer within the above range.

Other resins (B) may, for example, be a polyether imide, a polyaryl ketone, an aromatic polyester, a polyamide-imide, a thermoplastic polyimide, etc.

The additives (C) may, for example, be an inorganic filler, a pigment, etc.

In the resin-coated metal pipe of the present invention, a layer made of another resin may be formed on said resin coating layer, to the extent not to impair the effects of the present invention. As another resin, a melt-moldable fluororesin other than the fluororesin (A) or a non-fluorinated thermoplastic polymer may be mentioned. As the non-fluorinated thermoplastic polymer, a thermoplastic resin or a thermoplastic elastomer may be mentioned.

The thermoplastic resin may, for example, be an olefin resin such as polyethylene (high density polyethylene, medium density polyethylene, low density polyethylene, ultra low density polyethylene, etc.), polypropylene, polybutene, polybutadiene, an α-olefin-ethylene copolymer, etc.; a polyester resin such as polybutylene terephthalate, polyethylene terephthalate, polyethylene isophthalate, polyethylene naphthalate, etc.; a polyvinyl acetate resin such as polyvinyl acetate, an ethylene/vinyl acetate, etc.; a polyvinyl alcohol resin such as polyvinyl alcohol, a vinyl alcohol/ethylene copolymer, etc.; a polyvinyl chloride resin such as polyvinyl chloride, polyvinylidene chloride, a vinyl chloride/vinylidene chloride copolymer, etc.; a poly(meth)acrylate resin such as polymethyl acrylate, polyethyl acrylate, polymethyl methacrylate, polyethyl methacrylate, etc.; a polystyrene resin such as polystyrene, poly α-methylstyrene, etc.; a polynitrile resin such as polyacrylonitrile, polymethacrylonitrile, an acrylonitrile/styrene copolymer, a methacrylonitrile/styrene copolymer, a methacrylonitrile/styrene/butadiene copolymer, etc.; a polyamide resin such as nylon 11, nylon 12, nylon 610, nylon 612, nylon 66, nylon 46, etc.; a polyimide resin, thermoplastic polyimide, polyamideimide, polycarbonate, polyether ether ketone, polyether imide, polyether ketone, polysulfone, polyether sulfone, polyphenylene sulfone, polythioether sulfone, polyether nitrile, polyphenylene ether, polyphenylene sulfide, polyacetal, polyarylate; etc. Among them, a polyamide is preferred in the case of using for various types of piping such as fuel transport piping.

The thermoplastic elastomer may, for example, be a styrene thermoplastic elastomer, a vinyl chloride thermoplastic elastomer, an olefin thermoplastic elastomer, a polyurethane-type thermoplastic elastomer, a polyester thermoplastic elastomer, a nitrile-type thermoplastic elastomer, a polyamide-type thermoplastic elastomer, chlorinated polyethylene, a 1,2-polybutadiene-type thermoplastic elastomer, etc.

The thickness of the layer made of such another resin is preferably from 50 to 1,500 µm, more preferably from 100 to 300 µm, from the viewpoint of corrosion resistance, impact resistance and economical efficiency.

As applications of the resin-coated metal pipe of the present invention, various types of piping (fuel transport piping, brake system piping, etc.) in transport equipment (vehicle (automobile, railway vehicle, etc.), aircraft, etc.), heavy machinery (construction machinery, civil engineering machinery, etc.) may be mentioned.

The resin-coated metal pipe of the present invention is useful for fuel transport piping, brake system piping, etc., particularly useful for vehicle fuel transport piping, vehicle brake system piping, etc.

In the resin-coated metal pipe of the present invention as described above, a metal pipe is used as its base, and therefore, it has heat resistance.

Further, it has a plating layer formed by hot dipping plating on the outer peripheral surface of the metal tube, whereby, as compared with the case of forming a plating layer by electroplating, the plating layer is thick, and it is excellent in corrosion resistance, impact resistance, etc.

Further, the resin coating layer is a fluororesin, whereby, as compared with a polyamide, it is excellent in corrosion resistance.

Further, the resin coating layer is made of a resin material comprising a melt-moldable fluororesin (A) having at least one type of reactive functional group selected from the group consisting of a carbonyl group-containing group, a hydroxy group, an epoxy group and an isocyanate group, whereby adhesion between the plating layer and the resin coating layer is good without a primer layer.

By forming the resin coating layer by melt molding, the plating layer and the resin coating layer are firmly bonded. This is considered to be due to an interaction (e.g., hydrogen bonding) between hydroxyl groups at the surface of the plating layer and reactive functional groups of the fluororesin (A) contained in the resin coating layer.

The method for producing a resin-coated metal pipe of the present invention is a method to form a resin-coating layer by melt-molding a resin material comprising a fluororesin (A) on the surface of a plating layer of a plated metal pipe, wherein the fluororesin (A) is the fluorinated copolymer (A1).

As the method for producing a resin-coated metal pipe of the present invention, for example, a method having the following steps may be mentioned.
(a) A step of preparing a plated metal pipe having a plating layer formed by hot dipping plating on the outer peripheral surface of a metal pipe.
(b) A step of optionally contacting an acidic aqueous solution to the plating layer of the plated metal pipe after the step (a).
(c) A step of forming a resin-coating layer by melt-molding a resin material comprising a fluororesin (A) on the surface of the plating layer of the plated metal pipe after the step (a) or the step (b).

The method of preparing a plated metal pipe may, for example, be (a1) a method of obtaining a plated metal pipe by forming a plating layer by hot dipping plating on the outer peripheral surface of a metal pipe, or (a2) a method of purchasing a plated metal pipe from a manufacturer of a metal pipe.

As a method of hot dipping plating, a known method may be employed.

The method for contacting the acidic aqueous solution to the plating layer of the plated metal pipe may, for example, be (b1) a method of immersing the plated metal pipe in the acidic aqueous solution, or (b2) a method of permitting the acidic aqueous solution flow on the plating layer of the plated metal pipe, and the method (b1) is preferred, in that it is thereby possible to certainly contact the acidic aqueous solution to the plating layer.

By contacting the acidic aqueous solution to the plating layer of the plated metal pipe, adhesion between the plating layer and the resin coating layer will be further improved.

The acidic aqueous solution may, for example, be an aqueous nitric acid solution, an aqueous hydrochloric acid solution, an aqueous sulfuric acid solution, etc., and from the viewpoint of surface cleaning in a short time, an aqueous nitric acid solution is preferred.

The concentration of the aqueous nitric acid solution is preferably from 0.5 to 5 mass%, more preferably from 1 to 3 mass%. When the concentration of the aqueous nitric acid solution is at least the above lower limit value, sufficient surface cleaning effect is obtainable, and impurities, etc. will be sufficiently removed. When the concentration of the aqueous nitric acid solution is at most the above upper limit value, appearance gloss of the plating layer will be maintained.

The time for immersing the plated metal pipe in the acidic aqueous solution is preferably from 1 to 30 seconds, more preferably from 5 to 15 seconds. When the immersion time is at least the above lower limit value, a sufficient surface cleaning effect is obtainable. When the immersion time is at most the above upper limit value, surface cleaning can be carried out without lowering the production efficiency.

As the melt molding method, an extrusion molding method may be mentioned.

In the extrusion molding method, an extruder provided with a die crosshead, etc. may be used.

The method of forming a resin coating layer by the extrusion molding method, may be a method in which a resin material comprising a fluororesin (A) is melted in the extruder, and while passing the plated metal pipe through the die crosshead, from the discharge port of the die, the molten resin material is extruded around the plated metal pipe, to form a resin coating layer around the plated metal pipe.

Extrusion conditions (cylinder temperature, die temperature, extrusion rate, line speed, etc.), may be suitably set depending on the type of the fluororesin, the thickness of the resin coating layer, etc.

In the method for producing a resin-coated metal pipe of the present invention as described above, the resin coating layer is formed by melt molding on the surface of the plating layer, whereby it is not necessary to use a solvent, and environmental load is small. Further, it is not necessary to perform recoating, whereby the number of steps is small.

Further, the resin coating layer is formed by using a resin material comprising a melt-moldable fluororesin (A) having at least one type of reactive functional group selected from the group consisting of a carbonyl group-containing group, a hydroxy group, an epoxy group and an isocyanate group, whereby it is possible to produce a resin-coated metal pipe having good adhesion between the plating layer and the resin coating layer without a primer layer. Further, there is no need to form a primer layer, whereby the number of steps is small, and an environmental load is small.

### EXAMPLES

Hereinafter, the present invention will be described in detail with reference to Examples, but the technical scope of the present invention is not limited thereto.

Ex. 1 and 2 are Reference Examples, and Ex. 3 and 4 are Examples of the present invention.

### (Melting point)

Using a differential scanning calorimeter (DSC apparatus, manufactured by Seiko Instruments Ltd.), a melting peak of a fluororesin at the time of raising the temperature at a rate of 10°C/min was recorded, and the temperature corresponding to the maximum value was adopted as the melting point.

### (MFR)

Using a melt indexer (manufactured by Techno Seven Co., Ltd.), the mass (g) of a fluororesin flowing out of a nozzle with a diameter of 2 mm and a length of 8 mm at 297°C under a load of 49N for 10 minutes, was measured and adopted as MFR.

### (Volume flow rate)

The volume flow rate (Q value, mm³/sec) is an index representing the melt flowability of a fluororesin and serves as a measure of the molecular weight. The larger the Q value, the smaller the molecular weight, and the smaller the Q value, the larger the molecular weight. The Q value in Examples is the extrusion rate at the time of extruding a fluororesin into an orifice with a diameter of 2.1 mm and a length of 8 mm at 297°C under a load of 68.65N using the flow tester manufactured by Shimadzu Corporation.

### (Peel strength)

The interface between the plating layer and the resin coating layer in a resin-coated metal sheet, was peeled for 1cm from the end in the length direction of the resin-coated metal sheet to prepare a peel strength measurement test piece. Then, setting its position at the center, the resin coating layer of the test piece was peeled by a tensile testing apparatus (manufactured by A&D Company, Ltd., Model: Tensilon RTC) at 50 mm/minute at 180°, whereupon the maximum load was divided by the width of the test piece to calculate the peel strength.

### (Production of fluorinated copolymer (A1-1))

A polymerization tank having an internal capacity of 94L (liters) and equipped with a stirrer, was deaerated, and 71.3 kg of 1-hydroperfluorohexane, 20.4 kg of 1,3-dichloro-1,1,2,2,3-pentafluoropropane (manufactured by Asahi Glass Co., Ltd., AK225cb), 562 g of CH₂=CH(CF₂)₂F and 4.45g of IAH, were charged, whereupon the inside of the polymerization tank was heated to 66°C and pressurized to 1.5 MPa [gage] with a monomer mixture gas of TFE/ethylene in a molar ratio of 89/11. As a polymerization initiator, 1L of a 0.7 mass% 1-hydrotridecafluorohexane solution of tert-butyl peroxypivalate, was charged to start the polymerization. During the polymerization, a monomer mixture gas of TFE/ethylene in a molar ratio of 60/40 was charged continuously so that the pressure would be constant. Further, CH₂=CH(CF₂)₂F in an amount corresponding to 3.3 mol% and IAH in an amount corresponding to 0.5 mol%, to the total number of moles of TFE and ethylene charged during the polymerization, were continuously charged. After 9.9 hours from the initiation of the polymerization, at the time when 7.28 kg of the monomer mixture gas had been charged, the internal temperature of the polymerization tank was lowered to room temperature, and at the same time, the pressure was purged to normal pressure.

The obtained slurry-like fluorinated copolymer (A1-1) was put into a granulation tank of 200L charged with 77 kg of water, and was heated to 105°C under stirring, whereby granules were granulated while distilling off the solvent. The obtained granules were dried at 150°C for 15 hours, to obtain 6.9 kg of granules of the fluorinated copolymer (A1-1).

With respect to the fluorinated copolymer (A1-1), the melt NMR analysis, fluorine content analysis and infrared absorption spectrum analysis were conducted. From the results of the analyses, the ratio of structural units based TFE/structural units based on CH₂=CH(CF₂)₂/structural units based on IAH/structural units based on ethylene in the fluorinated copolymer (A1-1), was 58.6/2.0/0.3/39.1 (molar ratio). In the fluorinated copolymer (A1-1), the content of reactive functional groups was 3000 groups to 1×10⁶ carbon atoms in the main chain in the fluorinated copolymer (A1-1). The melting point of the fluorinated copolymer (A1-1) was 240°C, MFR was 18.5 g/10min, and the Q value was 28 mm³/sec.

### (Ex. 1)

Using a heating press (manufactured by Tester Sangyo Co., Ltd., SA301), the fluorinated copolymer (A1-1) was molded to obtain a fluororesin sheet 1 (thickness: 200 µm).

A plated steel sheet having a Zn-AI-Mg alloy plating layer formed by hot dipping plating on the surface of a steel sheet (manufactured by Nisshin Steel Co., Ltd., ZAM (registered trademark), <steel sheet> vertical: 10 cm, horizontal: 10 cm, thickness: 1.0 mm, <plating layer> Al/Mg/Zn = 6/3/88 (mass%), thickness: 20 µm) was prepared.

The plated steel sheet was washed with alcohol, then washed with water and dried, whereupon the fluororesin sheet 1 was brought in close contact with the plated steel sheet and subjected to thermocompression bonding under conditions of a temperature of 350°C and a pressure of 5 MPa, for 120 seconds, to obtain a resin-coated metal sheet.

The peel strength at the interface between the resin coating layer and the plating layer in the resin-coated metal sheet was 30 N/cm.

### (Ex. 2)

A resin-coated metal sheet was obtained in the same manner as in Ex. 1, except that the fluorinated copolymer (A1-1) was changed to a fluororesin having no reactive functional groups (manufactured by Asahi Glass Co., Ltd., Fluon (trademark) ETFE LM-720AP).

The peel strength at the interface between the resin coating layer and the plating layer in the resin-coated metal sheet was 5 N/cm.

### (Ex. 3)

A plated steel pipe having a Zn-AI-Mg alloy plating layer formed by hot dipping plating on the surface of a steel pipe (<steel pipe> outer diameter: 480 mm, wall thickness: 1.0 mm, <plating layer> Al/Mg/Zn = 6/3/88 (mass%), thickness: 30 µm) was prepared. The plated steel pipe was washed with alcohol, then washed with water and dried.

An extruder provided with a die crosshead (manufactured by Tanabe Plastics Machinery Co., Ltd., VDC40-100) was prepared. Conditions for extrusion were set to be cylinder temperature: 300°C, die temperature: 300°C, extrusion amount: 0.5 kg/hr, and line speed: 10m/min.

The fluorinated copolymer (A1-1) was melted in the extruder, and while letting the plated steel pipe pass through the die crosshead, the melted fluorinated copolymer (A1-1) was extruded around the plated steel pipe from the discharge port of the die, to form a resin coating layer (thickness: 100 µm) around the plated steel pipe thereby to obtain a resin-coated metal pipe.

### (Ex. 4)

A point with a diameter 5.0 mm was set at the multilayer die center, and through that point, a hot dipping plated pipe having hot dipping plating (Nisshin Steel Co., Ltd., ZAM (registered trademark)) of about 20 µm applied on a steel pipe having an outer diameter of 4.75 mm and an inner diameter of 3.2 mm, was passed, to form a multilayer resin-coated steel pipe having 100 µm of the fluorinated copolymer (A1-1) coated as the first layer and 0.3 mm of polyamide 12 (manufactured by Ube Industries, Ltd., 3030JI26I) coated as the second layer.

Conditions for extrusion were set to be fluororesin cylinder temperature: 350°C, polyamide 12 cylinder temperature: 280°C, multilayer die temperature: 300°C and line speed: 10m/min.

The interface between the plating layer and the resin coating layer of the multilayer resin-coated steel pipe, was peeled for 5cm in the length direction by making cut lines with a width of 2 mm from an longitudinal end of the multilayer resin-coated steel pipe, to prepare an adhesive strength measuring test piece. As the adhesive strength, the peel strength was calculated by peeling the resin coating layer of this test piece with a width of 2 mm at 180° at 50 mm/min in the length direction of the steel pipe by a tensile testing apparatus (manufactured by A&D Company, Ltd., Model: Tensilon RTC), and dividing the maximum load by the width of the test piece. The adhesive strength between the resin/metal of the resin-coated metal pipe was 33 N/cm. Further, the interface of the fluorinated copolymer (A1) and polyamide 12 was firmly bonded and impossible to be peeled.

The resin-coated metal pipe of the present invention is useful for various types of piping (fuel transport piping, brake system piping, etc.) in transport equipment (vehicle (automobile, railway vehicle, etc.), aircraft, etc.), heavy machinery (construction machinery, civil engineering machinery, etc.), etc.

### REFERENCE SYMBOLS

10: resin-coated metal pipe, 12: metal pipe, 14: plating layer, 16: resin coating layer

## Claims

1. A resin-coated metal pipe comprising
a metal pipe,
a plating layer formed by hot dipping plating on the outer peripheral surface of the metal pipe,
and a resin coating layer formed by melt molding on the surface of the plating layer, wherein
the resin coating layer is made of a resin material comprising a melt-moldable fluororesin (A) having at least one type of reactive functional group selected from the group consisting of a carbonyl group-containing group, a hydroxy group, an epoxy group and an isocyanate group, and
the fluororesin (A) is a fluorinated copolymer (A1) comprising structural units (u1) based on the following monomer (m1), structural units (u2) based on the following monomer (m2) and structural units (u3) based on the following monomer (m3):
Monomer (m1): tetrafluoroethylene,
Monomer (m2): a monomer having the reactive functional group,
Monomer (m3): a monomer other than the monomer (m1) and the monomer (m2).

2. The resin-coated metal pipe according to Claim 1, wherein the plating layer is made of zinc, or a zinc alloy wherein the content of zinc is at least 70 mass%.

3. The resin-coated metal pipe according to Claim 1 or 2, wherein the plating layer is made of a Zn-AI-Mg alloy.

4. The resin-coated metal pipe according to Claim 3, wherein the area ratio of phases other than the Zn phase in the ternary eutectic structure at the surface of the plating layer is at least 20%.

5. The resin-coated metal pipe according to any one of Claims 1 to 4, wherein the peel strength at the interface between the plating layer and the resin coating layer is at least 20 N/cm.

6. The resin-coated metal pipe according to any one of Claims 1 to 5, which has a layer made of a non-fluorinated thermoplastic polymer, on said resin coating layer.

7. The resin-coated metal pipe according to Claim 6, wherein the non-fluorinated thermoplastic polymer is a polyamide and for fuel piping.

8. The resin-coated metal pipe according to any one of Claims 1 to 7, wherein
the plating layer has a thickness of from 10 to 50 µm
and the resin coating layer has a film thickness of from 10 to 100 µm.

9. A method for producing a resin-coated metal pipe according to claim 1, which comprises melt-molding a resin material comprising a melt-moldable fluororesin (A) having at least one type of reactive functional group selected from the group consisting of a carbonyl group-containing group, a hydroxy group, an epoxy group and an isocyanate group, on the surface of a plating layer of a metal pipe having the plating layer formed by hot dipping plating on its outer peripheral surface,
wherein the fluororesin (A) is a fluorinated copolymer (A1) comprising structural units (u1) based on the following monomer (m1), structural units (u2) based on the following monomer (m2) and structural units (u3) based on the following monomer (m3):
Monomer (m1): tetrafluoroethylene,
Monomer (m2): a monomer having the reactive functional group,
Monomer (m3): a monomer other than the monomer (m1) and the monomer (m2).

10. The method for producing a resin-coated metal pipe according to Claim 9, wherein the plating layer is made of zinc, or a zinc alloy wherein the content of zinc is at least 70 mass%.

11. The method for producing a resin-coated metal pipe according to Claim 9 or 10, wherein the plating layer is made of a Zn-AI-Mg alloy.

12. The method for producing a resin-coated metal pipe according to Claim 11, wherein the area ratio of phases other than the Zn phase in the ternary eutectic structure at the surface of the plating layer is at least 20%.

13. The method for producing a resin-coated metal pipe according to any one of Claims 9 to 12, wherein the peel strength at the interface between the plating layer and the resin coating layer is at least 20 N/cm.

14. The method for producing a resin-coated metal pipe according to any one of Claims 9 to 13, wherein a layer made of a non-fluorinated thermoplastic polymer is formed on said resin coating layer.

15. The method for producing a resin-coated metal pipe according to Claim 14, wherein the non-fluorinated thermoplastic polymer is a polyamide and for fuel piping.

## Patentansprüche

1. Harzbeschichtetes Metallrohr, umfassend
ein Metallrohr,
eine Plattierungsschicht gebildet durch Heißtauchplattieren auf der äußeren Umfangsoberfläche des Metallrohrs,
und eine Harzbeschichtungsschicht gebildet durch Schmelzformen auf der Oberfläche der Plattierungsschicht, wobei
die Harzbeschichtungsschicht aus einem Harzmaterial besteht, umfassend ein schmelzformbares Fluorharz (A) mit mindestens einer Art von reaktiver funktionaler Gruppe, ausgewählt aus der Gruppe, bestehend aus einer Carbonylgruppe-enthaltenden Gruppe, einer Hydroxygruppe, einer Epoxygruppe und einer Isocyanatgruppe, und
das Fluorharz (A) ein fluoriertes Copolymer (A1) ist, umfassend Struktureinheiten (u1) basierend auf dem nachstehenden Monomer (m1), Struktureinheiten (u2) basierend auf dem nachstehenden Monomer (m2) und Struktureinheiten (u3) basierend auf dem nachstehenden Monomer (m3):
Monomer (m1): Tetrafluorethylen,
Monomer (m2): ein Monomer mit der reaktiven funktionalen Gruppe,
Monomer (m3): ein Monomer anders als das Monomer (m1) und das Monomer (m2).

2. Harzbeschichtetes Metallrohr nach Anspruch 1, wobei die Plattierungsschicht aus Zink oder einer Zinklegierung besteht, wobei der Gehalt des Zinks mindestens 70 Massen-% beträgt.

3. Harzbeschichtetes Metallrohr nach Anspruch 1 oder 2, wobei die Plattierungsschicht aus einer Zn-Al-Mg-Legierung besteht.

4. Harzbeschichtetes Metallrohr nach Anspruch 3, wobei das Flächenverhältnis der Phasen anders als die Zinkphase in der ternären eutektischen Struktur auf der Oberfläche der Plattierungsschicht mindestens 20% beträgt.

5. Harzbeschichtetes Metallrohr nach einem der Ansprüche 1 bis 4, wobei die Schälfestigkeit an der Grenzfläche zwischen der Plattierungsschicht und der Harzbeschichtungsschicht mindestens 20 N/cm beträgt.

6. Harzbeschichtetes Metallrohr nach einem der Ansprüche 1 bis 5, welches eine Schicht, bestehend aus einem nichtfluorierten thermoplastischen Polymer, auf der Harzbeschichtungsschicht aufweist.

7. Harzbeschichtetes Metallrohr nach Anspruch 6, wobei das nichtfluorierte thermoplastische Polymer ein Polyamid und für Kraftstoffleitungen ist.

8. Harzbeschichtetes Metallrohr nach einem der Ansprüche 1 bis 7, wobei die Plattierungsschicht eine Dicke von 10 bis 50 µm aufweist.

9. Verfahren zum Herstellen eines harzbeschichteten Metallrohrs nach Anspruch 1, welches umfasst
Schmelzformen eines Harzmaterials, umfassend ein schmelzformbares Fluorharz (A) mit mindestens einer Art von reaktiver funktionaler Gruppe, ausgewählt aus der Gruppe, bestehend aus einer Carbonylgruppe-enthaltenden Gruppe, einer Hydroxygruppe, einer Epoxygruppe und einer Isocyanatgruppe, auf der Oberfläche einer Plattierungsschicht eines Metallrohrs, das die Plattierungsschicht, die durch Heißtauchplattieren auf dessen äußerer Umfangsoberfläche gebildet ist, aufweist,
wobei das Fluorharz (A) ein fluoriertes Copolymer (A1) ist, umfassend Struktureinheiten (u1) basierend auf dem nachstehenden Monomer (m1), Struktureinheiten (u2) basierend auf dem nachstehenden Monomer (m2) und Struktureinheiten (u3) basierend auf dem nachstehenden Monomer (m3):
Monomer (m1): Tetrafluorethylen,
Monomer (m2): ein Monomer mit der reaktiven funktionalen Gruppe,
Monomer (m3): ein Monomer anders als das Monomer (m1) und das Monomer (m2).

10. Verfahren zum Herstellen eines harzbeschichteten Metallrohrs nach Anspruch 9, wobei die Plattierungsschicht aus Zink oder einer Zinklegierung besteht, wobei der Gehalt des Zinks mindestens 70 Massen-% beträgt.

11. Verfahren zum Herstellen eines harzbeschichteten Metallrohrs nach Anspruch 9 oder 10, wobei die Plattierungsschicht aus einer Zn-Al-Mg-Legierung besteht.

12. Verfahren zum Herstellen eines harzbeschichteten Metallrohrs nach Anspruch 11, wobei das Flächenverhältnis der Phasen anders als die Zinkphase in der ternären eutektischen Struktur auf der Oberfläche der Plattierungsschicht mindestens 20% beträgt.

13. Verfahren zum Herstellen eines harzbeschichteten Metallrohrs nach einem der Ansprüche 9 bis 12, wobei die Schälfestigkeit an der Grenzfläche zwischen der Plattierungsschicht und der Harzbeschichtungsschicht mindestens 20 N/cm beträgt.

14. Verfahren zum Herstellen eines harzbeschichteten Metallrohrs nach einem der Ansprüche 9 bis 13, wobei eine Schicht, bestehend aus einem nichtfluorierten thermoplastischen Polymer, auf der Harzbeschichtungsschicht gebildet wird.

15. Verfahren zum Herstellen eines harzbeschichteten Metallrohrs nach Anspruch 14, wobei das nichtfluorierte thermoplastische Polymer ein Polyamid und für Kraftstoffleitungen ist.

## Revendications

1. Tuyau métallique revêtu de résine comprenant :
un tuyau métallique ;
une couche de placage qui est formée au moyen d'un placage par trempage à chaud sur la surface périphérique externe du tuyau métallique ; et
une couche de revêtement en résine qui est formée par moulage à l'état fondu sur la surface de la couche de placage ; dans lequel :
la couche de revêtement en résine est constituée par un matériau de résine qui comprend une fluororésine pouvant être moulée à l'état fondu (A) qui comporte au moins un type de groupe fonctionnel réactif qui est sélectionné parmi le groupe qui est constitué par un groupe contenant un groupe carbonyle, un groupe hydroxy, un groupe époxy et un groupe isocyanate ; et
la fluororésine (A) est un copolymère fluoré (A1) qui comprend des unités structurelles (u1) qui sont basées sur le monomère qui suit (m1), des unités structurelles (u2) qui sont basées sur le monomère qui suit (m2) et des unités structurelles (u3) qui sont basées sur le monomère qui suit (m3) :
monomère (m1) : tétrafluoroéthylène ;
monomère (m2) : un monomère qui comporte le groupe fonctionnel réactif ; et
monomère (m3) : un monomère autre que le monomère (m1) et que le monomère (m2).

2. Tuyau métallique revêtu de résine selon la revendication 1, dans lequel la couche de placage est réalisée en zinc ou en un alliage de zinc dans lequel la teneur en zinc est d'au moins 70 % en masse.

3. Tuyau métallique revêtu de résine selon la revendication 1 ou 2, dans lequel la couche de placage est réalisée en un alliage de Zn-Al-Mg.

4. Tuyau métallique revêtu de résine selon la revendication 3, dans lequel le rapport des aires de phases autres que la phase Zn dans la structure eutectique ternaire au niveau de la surface de la couche de placage est d'au moins 20 %.

5. Tuyau métallique revêtu de résine selon l'une quelconque des revendications 1 à 4, dans lequel la résistance au pelage au niveau de l'interface entre la couche de placage et la couche de revêtement en résine est d'au moins 20 N/cm.

6. Tuyau métallique revêtu de résine selon l'une quelconque des revendications 1 à 5, lequel comporte une couche réalisée en un polymère thermoplastique non fluoré, sur ladite couche de revêtement en résine.

7. Tuyau métallique revêtu de résine selon la revendication 6, dans lequel le polymère thermoplastique non fluoré est un polyamide et est prévu pour l'alimentation en carburant par tuyau.

8. Tuyau métallique revêtu de résine selon l'une quelconque des revendications 1 à 7, dans lequel la couche de placage présente une épaisseur qui va de 10 à 50 µm.

9. Procédé pour fabriquer un tuyau métallique revêtu de résine selon la revendication 1, lequel comprend le moulage à l'état fondu d'un matériau de résine qui comprend une fluororésine pouvant être moulée à l'état fondu (A) qui comporte au moins un type de groupe fonctionnel réactif qui est sélectionné parmi le groupe qui est constitué par un groupe contenant un groupe carbonyle, un groupe hydroxy, un groupe époxy et un groupe isocyanate, sur la surface d'une couche de placage d'un tuyau métallique qui comporte la couche de placage qui est formée au moyen d'un placage par immersion à chaud sur sa surface périphérique externe ; dans lequel :
la fluororésine (A) est un copolymère fluoré (A1) qui comprend des unités structurelles (u1) qui sont basées sur le monomère qui suit (m1), des unités structurelles (u2) qui sont basées sur le monomère qui suit (m2) et des unités structurelles (u3) qui sont basées sur le monomère qui suit (m3) :
monomère (m1) : tétrafluoroéthylène ;
monomère (m2) : un monomère qui comporte le groupe fonctionnel réactif ; et
monomère (m3) : un monomère autre que le monomère (m1) et que le monomère (m2).

10. Procédé pour fabriquer un tuyau métallique revêtu de résine selon la revendication 9, dans lequel la couche de placage est réalisée en zinc ou en un alliage de zinc dans lequel la teneur en zinc est d'au moins 70 % en masse.

11. Procédé pour fabriquer un tuyau métallique revêtu de résine selon la revendication 9 ou 10, dans lequel la couche de placage est réalisée en un alliage de Zn-Al-Mg.

12. Procédé pour fabriquer un tuyau métallique revêtu de résine selon la revendication 11, dans lequel le rapport des aires de phases autres que la phase Zn dans la structure eutectique ternaire au niveau de la surface de la couche de placage est d'au moins 20 %.

13. Procédé pour fabriquer un tuyau métallique revêtu de résine selon l'une quelconque des revendications 9 à 12, dans lequel la résistance au pelage au niveau de l'interface entre la couche de placage et la couche de revêtement en résine est d'au moins 20 N/cm.

14. Procédé pour fabriquer un tuyau métallique revêtu de résine selon l'une quelconque des revendications 9 à 13, dans lequel une couche réalisée en un polymère thermoplastique non fluoré est formée sur ladite couche de revêtement en résine.

15. Procédé pour fabriquer un tuyau métallique revêtu de résine selon la revendication 14, dans lequel le polymère thermoplastique non fluoré est un polyamide et est prévu pour l'alimentation en carburant par tuyau.
